# EUROPÄISCHE PATENTSCHRIFT

(11) **EP 3 036 554 B1**
(45) Veröffentlichungstag und Bekanntmachung des Hinweises auf die Patenterteilung: **28.11.2018**
(21) Anmeldenummer: 14753275.8
(22) Anmeldetag: 22.08.2014
(51) Int. Cl.: G01S 5/00, H04L 29/06, H04L 29/08, G08G 1/09, G08G 1/16, G08G 1/0967, H04W 4/02, H04W 84/18

(54) **CAR2X-EMPFÄNGERFILTERUNG BASIEREND AUF EMPFANGSKORRIDOR IN GEOKOORDINATEN**
CAR2X RECEIVER FILTERING BASED ON A RECEIVING CORRIDOR IN A GEOGRAPHIC COORDINATE SYSTEM
FILTRAGE DE RÉCEPTION CAR2X BASÉ SUR LE CORRIDOR DE RÉCEPTION EN COORDONNÉES GÉOGRAPHIQUES

(30) Priorität: 22.08.2013 DE 102013216626
(43) Veröffentlichungstag der Anmeldung: 29.06.2016
(73) Patentinhaber: Continental Teves AG & Co. OHG, 60488 Frankfurt am Main (DE)
(72) Erfinder: GROTENDORST, Thomas, 65760 Eschborn (DE); MENZEL, Marc, 35096 Weimar (Lahn) (DE); SCHERPING, Richard, 65835 Liederbach am Taunus (DE); STÄHLIN, Ulrich, 65760 Eschborn (DE)
(86) Internationale Anmeldenummer: PCT/EP2014/067939
(87) Internationale Veröffentlichungsnummer: WO 2015/025047

(56) Entgegenhaltungen:
- WO-A1-2013/185997
- DE-A1-102011 078 704
- DE-A1-102012 204 880
- US-A1- 2011 140 968
- JIUN-REN LIN ET AL: "Feasibility of Safety Applications Based on Intra-Car Wireless Sensor Networks: A Case Study", VEHICULAR TECHNOLOGY CONFERENCE (VTC FALL), 2011 IEEE, IEEE, 5. September 2011 (2011-09-05), Seiten 1-5, XP032029549, DOI: 10.1109/VETECF.2011.6093065 ISBN: 978-1-4244-8328-0

## Beschreibung

Die Erfindung betrifft ein Verfahren zum Filtern einer zwischen einem Sender und einem Empfänger in einem Fahrzeug-Ad-hoc-Netzwerk übertragenen Nachricht, eine Filtervorrichtung zur Durchführung des Verfahrens und einen Empfänger mit der Filtervorrichtung.

Aus der WO 2010 / 139 526 A1 ist ein Car2X genanntes mobiles Ad-hoc-Netz bekannt, dessen Knoten bestimmte Straßenverkehrsteilnehmer wie Fahrzeuge oder andere Objekte im Straßenverkehr, wie Ampeln sind. Über diese Netzwerke können den am Car2X-Netzwerk beteiligten Straßenverkehrsteilnehmern Hinweise über Straßenverkehrszustände, wie Unfälle, Staus, Gefahrensituationen, ... bereitgestellt werden.

Aus der DE 10 2011 078 704 A1 ist ein Verfahren zum Filtern einer zwischen einem Sender und einem Empfänger in einem Fahrzeug-Ad-hoc-Netzwerk übertragenen Nachricht, die wenigstens eine Position des Senders enthält, bekannt, wobei die Position des Empfängers mittels eines globales Satellitennavigationssystems und eine Entscheidungsschwelle zum Verwerfen von irrelevanten Nachrichten bestimmt werden.

Es ist Aufgabe die Nutzung derartiger mobiler Ad-hoc-Netze zu verbessern.

Die Aufgabe wird durch die Merkmale der unabhängigen Ansprüche gelöst. Bevorzugte Weiterbildungen sind Gegenstand der abhängigen Ansprüche.

Dem angegebenen Verfahren liegt die Überlegung zugrunde, dass in einem Fahrzeug-Ad-hoc-Netzwerk Nachrichten beschreibende Nutzdaten zwischen Sender und Empfänger gewöhnlich in sogenannten Datenpaketen ausgetauscht werden. Versendet der Sender Nutzdaten, verpackt er diese in einem Datenpaket und sendet es an den Empfänger, der dann die Nutzdaten zur Weiterverarbeitung aus dem Datenpacket auspacken muss. Hierzu ist ein bestimmtes Maß an Rechenleistung notwendig. Da je nach Verkehrssituation unterschiedlich viele Nachrichten und damit Nutzdaten ausgetauscht werden, ist auch die bereitzuhaltende Rechenleistung zur Weiterverarbeitung der entsprechenden Datenpakete von der Verkehrssituation abhängig. Die bereitzuhaltende Rechenleistung könnte aber harmonisiert werden, wenn ein Teil der im Empfänger empfangenen Datenpakete beispielsweise vorab als irrelevant ausgefiltert wird, so dass sich der Empfänger die entsprechende Nachricht gar nicht mehr ansehen muss.

Für derartige Filterungen müssen jedoch Entscheidungsgrundlagen geschaffen werden, um die empfangenen Datenpakete als relevant oder irrelevant zu klassifizieren. Als eine derartige Entscheidungsgrundlage könnte beispielsweise eine Entscheidungsschwelle für den räumlichen Abstand zwischen dem Sender und dem Empfänger eines Datenpaketes verwendet werden, wobei der Sender hier nicht als physikalischer Absender des Datenpaketes sondern als Originator des Datenpaketes verstanden werden soll, der die Nutzdaten in dem Datenpaket erzeugt hat. Der physikalische Absender des Datenpaketes kann auch eine Zwischeninstanz sein, die das Datenpaket beispielsweise vom Originator und damit vom eigentlichen Sender empfangen und an den Empfänger weitergeleitet hat. Ist ein Fahrzeug als Empfänger beispielsweise zu weit von einem Sender, wie einem anderen Fahrzeug, einer Ampel und so weiter entfernt, so kann der Sender allein aufgrund seines zu hohen räumlichen Abstandes zum Empfänger als unrelevant aussortiert werden.

In den Abstand zwischen Sender und Empfänger geht zunächst die absolute Position des Empfängers ein, die problemlos anhand des globalen Satellitennavigationssystems bestimmt werden kann. Die absolute Position des Senders wird über das Fahrzeug-Ad-Hoc-Netzwerk übertragen, so dass der Abstand zwischen Sender und Empfänger grundsätzlich bestimmbar ist. Die Entscheidungsschwelle zur Filterung eines Datenpaktes und damit einer Nachricht basierend auf dem räumlichen Abstand zwischen Sender und Empfänger wird jedoch in einem Koordinatensystem bestimmt, das durch einer Spezifikation für das Fahrzeug-Ad-Hoc-Netzwerk definiert wird, denn basierend auf diesem Koordinatensystem werden die oben genannten Nutzdaten des Datenpaketes dann auch weiterverarbeitet, wenn das Datenpaket nicht ausgefiltert wird. Bei diesem Koordinatensystem handelt es sich aus technischen Gründen um das kartesische Koordinatensystem.

Zur Filterung eines empfangenen Datenpaketes und damit einer Nachricht basierend auf dem Abstand zwischen Sender und Empfänger muss daher die zuvor genannte, über das globale Navigationssatellitensystem bestimmte Position des Empfängers zunächst in das durch die Spezifikation für das Fahrzeug-Ad-Hoc-Netzwerk definierte Koordinatensystem umgerechnet werden, bevor basierend auf der in diesem Koordinatensystem bestimmten Entscheidungsschwelle die Entscheidung zum Ausfiltern des empfangenen Datenpaketes getroffen werden kann. Da im Regelfall, insbesondere in Hochlastsituationen die meiden Datenpakete ohnehin ausgefiltert und daher nicht weiterverwendet werden, kann an dieser Stelle jedoch ein unnötig hoher Rechenaufwand entstehen.

Um diesen Rechenaufwand zu verringern und die oben genannte Harmonisierung der Rechenlast in Hochlastzeiten zu erreichen, wird im Rahmen des angegebenen Verfahrens vorgeschlagen, die Entscheidungsschwelle nicht mehr im durch den Standard für das Fahrzeug-Ad-Hoc-Netzwerk definierten Koordinatensystem sondern im durch das globale Satellitennavigationssystem vorgegebenen Koordinatensystem zu bestimmen. Auf diese Weise kann unmittelbar nach dem Empfang eines Datenpaketes entschieden werden, ob dies ausgefiltert wird, oder nicht und der Filtervorgang so früh wie möglich in der Empfangskette durchgeführt werden.

In einer Weiterbildung des angegebenen Verfahrens ist das vorbestimmte Koordinatensystem ein sphärisches Koordinatensystem, das Positionen in Geokoordinaten auf der Erdoberfläche beschreibt. Ein derartiges Koordinatensystem wird auch ellipsoidisches Koordinatensystem genannt und ist systembedingt weltweit gültig. Es muss daher nicht erst an einen lokalen Standard angepasst werden.

Gemäß einem weiteren Aspekt des angegebenen Verfahrens umfasst die Entscheidungsschwelle einen Korridor um die Position des Empfängers, so dass die Nachricht verworfen wird, wenn die Position des Senders außerhalb des Korridors liegt. Der Korridor definiert dabei einen Bereich um den Empfänger herum.

Der Bereich bewegt sich prinzipiell mit dem Empfänger. Dabei können der Empfänger ein Fahrzeug sein und der Korridor kann in Fahrtrichtung des Fahrzeuges größer sein, als entgegen der Fahrtrichtung. Auf diese Weise kann der Korridor über einen vorbestimmten Zeitraum konstant gehalten werden, und muss nicht mit jeder Ortsveränderung des Fahrzeuges neu berechnet werden, was ebenfalls zu einer spürbaren Abnahme an zur Durchführung des angegebenen Verfahrens notwendigen Rechenleistung führt. Alternativ ist es denkbar die Aktualisierung des Korridors in Abhängigkeit von einer spürbaren oder signifikanten Änderung der Position des Empfängers durchzuführen.

Gemäß einer einfach auszuführenden Alternative umfasst der Korridor ein rechtwinklig zum Navigationskoordinatensystem ausgerichtetes Rechteck. Der Korridor umfasst also vier Schwellwerte, die Distanzen in die vier Himmelsrichtungen entsprechen. Die Entscheidung ob eine Nachricht verworfen wird bzw. die Relevanzprüfung umfasst dann zwei Bedingungen, die beide erfüllt sein müssen:
- Latitude des Senders zwischen Nord- und Südschwellwert?
- Longitude des Senders zwischen West- und Ostschwellwert? Wird dieses Rechteck dem aktuellen Eigenheading entsprechend gedreht, werden die Bedingungen aufwändiger und es kommen einfache Multiplikationen hinzu.

Gemäß einem weiteren Aspekt umfasst das angegebene Verfahren den Schritt Festlegen des Korridors, wenn das Fahrzeug einen weiteren, im Korridor liegenden Korridor verlässt. Über diesen weiteren Korridor kann damit in einfacher Weise berechnet werden, wann der übergeordnete Korridor, dem die Filterung zugrunde liegt, neu berechnet werden soll.

In einer besonderen Weiterbildung des angegebenen Verfahrens ist der weitere Korridor von einer Geschwindigkeit des Fahrzeuges abhängig. Auf diese Weise können verschiedene Verkehrssituationen berücksichtigt werden, wie beispielsweise eine freie Fahrt auf der Autobahn und eine Fahrt im Stau, wodurch beispielsweise berücksichtigt ist, dass bei höheren Eigengeschwindigkeiten des Empfängers, also des Fahrzeuges der Empfang weniger Datenpakete zu erwarten ist. Gleichfalls kann auch die Entscheidungsschwelle selbst, wie beispielsweise der übergeordnete Korridor von der Geschwindigkeit des Empfängers, also beispielsweise des Fahrzeuges, abhängig sein.

In einer anderen Weiterbildung des angegebenen Verfahrens ist die Position des Senders in einem Header des Datenpaketes gespeichert und kann somit sofort ausgewertet und der Filterung zugrunde gelegt werden.

Gemäß einem weiteren Aspekt der Erfindung ist eine Filtervorrichtung eingerichtet, ein Verfahren nach einem der vorstehenden Ansprüche durchzuführen.

In einer Weiterbildung der angegebenen Filtervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Empfänger für ein Fahrzeug zum Empfangen eines Übertragungssignals, das eingerichtet ist wenigstens Positionsdaten zu Fahrzeugen enthaltende Datenpakete zu tragen,
- eine Antenne zum Empfangen des Übertragungssignals,
- eine der angegebenen Filtervorrichtungen zum Filtern wenigstens eines Teils der Datenpakete aus dem Übertragungssignal,
- eine Darstellungsvorrichtung zum Zusammensetzen der Positionsdaten aus den gefilterten Datenpaketen, und
- eine Ausgabeschnittstelle zum Ausgeben der Positionsdaten in dem Fahrzeug.

Gemäß einem anderen Aspekt der Erfindung umfasst ein Fahrzeug einen der angegebenen Empfänger.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines auf einer Straße fahrenden Fahrzeuges,
Fig. 2 eine Prinzipdarstellung des Fahrzeuges der Fig. 1,
Fig. 3 eine Prinzipdarstellung eines Fahrzeug-Ad-Hoc-Netzwerkes für das Fahrzeug der Fig. 1 und 2, und
Fig. 4 eine Prinzipdarstellung eines Koordinatensystems zur Beschreibung einer Position des Fahrzeuges der Fig. 1 auf der Straße zeigen.

In den Figuren werden gleiche technische Elemente mit gleichen Bezugszeichen versehen und nur einmal beschrieben.

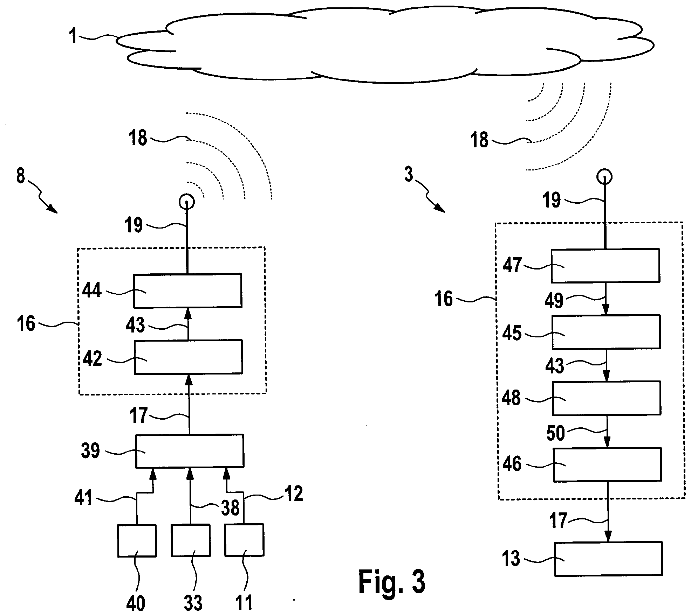

Die Erfindung betrifft ein Netzwerkprotokoll für ein in Fig. 3 gezeigtes Fahrzeug-Ad-Hoc-Netzwerk, das nachstehend der Einfachheit halber Car2X-Netzwerk 1 genannt wird. Zur besseren Verständlichkeit des technischen Hintergrundes zu diesem Car2X-Netzwerk 1 soll zunächst ein nicht einschränkendes Anwendungsbeispiel zu diesem Car2X-Netzwerk 1 gegeben werden, bevor auf technische Einzelheiten zu diesem näher eingegangen wird.

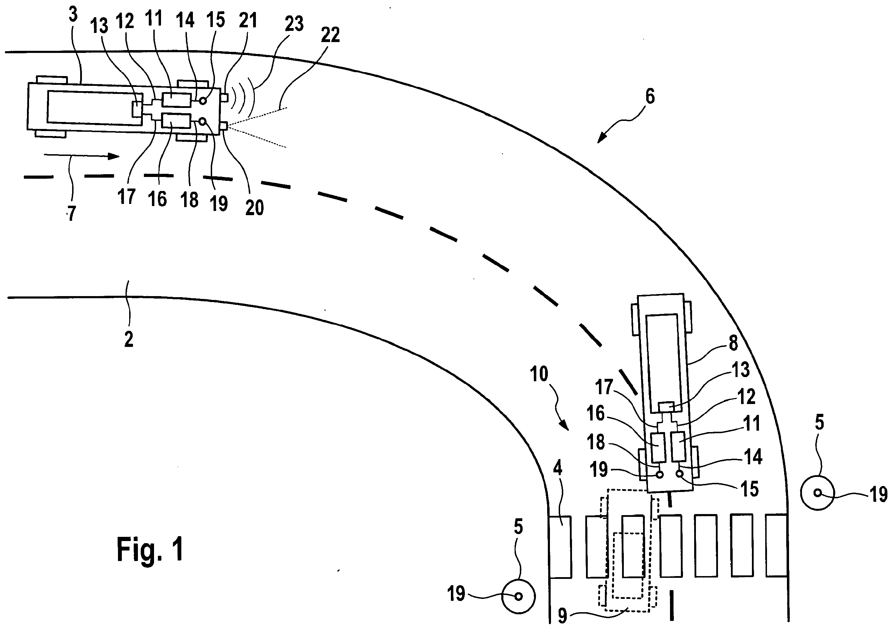

Es wird daher auf Fig. 1 Bezug genommen, die eine Prinzipdarstellung eines auf einer Straße 2 fahrenden Fahrzeuges 3 zeigt.

In der vorliegenden Ausführung soll sich auf der Straße 2 eine Fußgängerüberführung 4 befinden, an der mittels einer Ampel 5 geregelt wird, ob das Fahrzeug 4 auf der Straße 2 die Fußgängerüberführung 4 überqueren darf oder ein nicht weiter dargestellter Fußgänger auf der Fußgängerüberführung 4 die Straße 2. Zwischen der Fußgängerüberführung 4 und der Ampel 5 befindet sich im Rahmen der vorliegenden Ausführung ein Hindernis in Form einer Kurve 9, die die Fußgängerüberführung 4 dem Fahrer des Fahrzeuges 3 sowie einer noch zu beschreibenden Umfeldsensorik des Fahrzeuges 3 gegenüber verdeckt.

In einer Fahrtrichtung 7 vor dem Fahrzeug 3 ist in Fig. 1 ein weiteres Fahrzeug 8 dargestellt, das mit einem gepunktet dargestellten Fahrzeug 9 auf der Fußgängerüberführung 4 in einen Verkehrsunfall 10 verwickelt ist und die Fahrspur in Fahrtrichtung 7 des Fahrzeuges 3 blockiert.

Die Fußgängerüberführung 4 und der Verkehrsunfall 10 stellen Gefahrensituationen auf der Straße 2 dar. Übersieht der Fahrer des Fahrzeuges 3 die Fußgängerüberführung 4 und hält vor dieser damit regelwidrig nicht an, so könnte er einen die Fußgängerüberführung 4 überquerenden Fußgänger erfassen, der beim Überqueren der Fußgängerüberführung 4 auf das regelkonforme Verhalten des Fahrers des Fahrzeuges 3 vertraut. In beiden Gefahrensituationen muss der Fahrer des Fahrzeuges 3 das Fahrzeug 3 anhalten, um eine Kollision mit dem Gefahrenobjekt in der Gefahrensituation, also dem Fußgänger und/oder dem weiteren Fahrzeug 8 zu vermeiden. Hierzu kann das Car2X-Netzwerk 1 verwendet werden, worauf an späterer Stelle näher eingegangen wird.

Das Fahrzeug 3 weist in der vorliegenden Ausführung einen Empfänger 11 für ein globales Satellitennavigationssystem, nachstehend GNSS-Empfänger 11 genannt auf, über den das Fahrzeug 3 in einer an sich bekannten Weise Positionsdaten in Form seiner absoluten geographischen Lage 12 bestimmen und beispielsweise im Rahmen eines Navigationssystems 13 nutzen kann, um diese auf einer nicht weiter dargestellten geographischen Karten anzuzeigen. Entsprechende Signale 14 des Globalen Satellitennavigationssystems, nachstehend GNSS-Signale 14 genannt, können beispielsweise über eine entsprechende GNSS-Antenne 15 empfangen und in an sich bekannter Weise an den GNSS-Empfänger 11 weitergeleitet werden.

Das Fahrzeug weist in der vorliegenden Ausführung ferner einen Transceiver 16 auf, über den das Fahrzeug 3 als Knoten am Car2X-Netzwerk 1 teilnehmen und mit anderen Knoten, wie beispielsweise dem weiteren Fahrzeug 8 und/oder der Ampel 5 nachstehend Car2X-Nachrichten 17 genannte Nachrichten austauschen kann. Dieser Transceiver 16 soll zur Abgrenzung gegenüber dem GNSS-Empfänger 11 nachstehend Car2X-Transceiver 16 genannt werden.

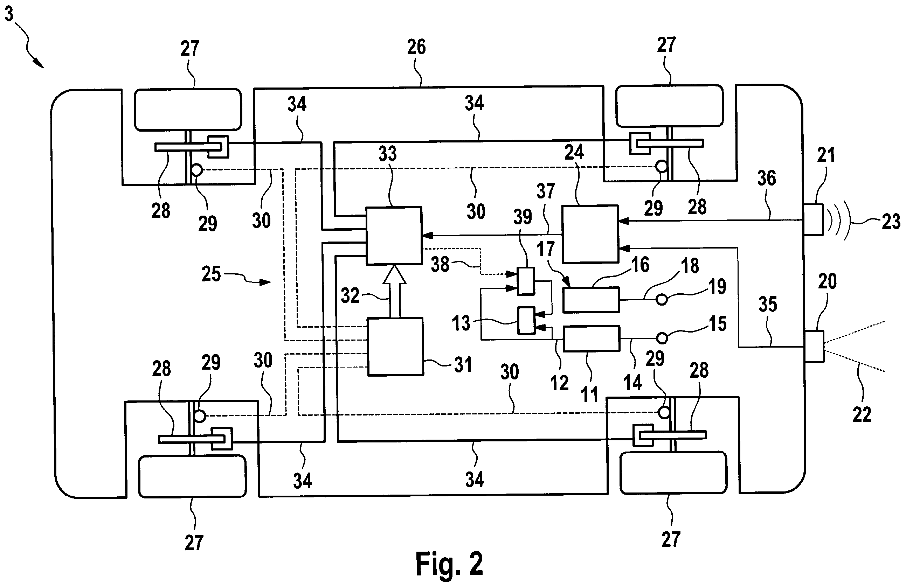

In den über das Car2X-Netzwerk 1 ausgetauschten Car2X-Nachrichten 17, können die einzelnen Knoten 3, 5, 8 untereinander verschiedene Informationen beschreibende Daten austauschen mit denen beispielsweise die Verkehrssicherheit auf der Straße 2 erhöht werden kann. Ein Beispiel für die Informationen, die mit den Daten in den Car2X-Nachrichten 17 ausgetauscht werden können, wäre die über den GNSS-Empfänger 11 bestimmte absolute geographische Lage 12 des jeweiligen Knotens 3, 5, 8 des Car2X-Netzwerkes 1. Derartige Daten können auch als Positionsdaten bezeichnet werden. Ist der die geographische Lage 12 empfangende Knoten 3, 5, 8 des Car2X-Netzwerkes 1 ein Fahrzeug, wie beispielsweise das nicht am Verkehrsunfall 10 beteiligte Fahrzeug 3 und das am Verkehrsunfall 10 beteiligte Fahrzeug 8 dann kann die über das Car2X-Netzwerk 1 empfangene geographische Lage 12 beispielsweise auf dem Navigationssystem 13 des empfangenden Fahrzeuges 3, 8 zur Darstellung beispielsweise der Verkehrsbewegung verwendet werden. Wird neben der absoluten geographischen Lage 12 auch der Verkehrsunfall 10 als Information mit den Daten in der Car2X-Nachricht 17 beschrieben, so können bestimmte Verkehrssituationen, wie beispielsweise der Verkehrsunfall 10 auf Navigationssystem 13 konkreter dargestellt werden. Auf weitere mögliche mit den Car2X-Nachrichten 17 austauschbare Informationen wird später im Rahmen der Fig. 2 näher eingegangen.

Zum Austausch der Car2X-Nachrichten 17 moduliert der Car2X-Transceiver 16 entweder eine Car2X-Nachricht 17 auf ein nachstehend Car2X-Signal 18 genanntes Übertragungssignal und versendet es über eine nachstehend Car2X-Antenne 19 genannte Antenne an die anderen Knoten 3, 5, 8 im Car2X-Netzwerk 1 oder er empfängt über die Car2X-Antenne 19 ein Car2X-Signal 18 und filtert aus diesem die entsprechende Car2X-Nachricht 17 heraus. Darauf wird an späterer Stelle im Rahmen der Fig. 3 näher eingegangen. In Fig. 1 ist dabei dargestellt, dass der Car2X-Transciever 16 eine Car2X-Nachricht 17 an das Navigationssystem 13 unter der Annahme ausgibt, dass diese in der oben beschriebenen Weise Informationen enthält, die auf diesem darstellbar sind. Das ist jedoch nicht einschränkend zu verstehen. Insbesondere kann zweckmäßigerweise auch der GNSS-Empfänger 11 direkt oder, wie in Fig. 2 gezeigt, indirekt mit dem Car2X-Transceiver 16 verbunden sein, um die eigene absolute geographische Lage 12 im Car2X-Netzwerk 1 zu versenden.

Die Struktur der Car2X-Nachricht 17 sowie des Car2X-Signals 18 und damit der Aufbau des Car2X-Netzwerkes können in einem Kommunikationsprotokoll definiert werden. Es gibt bereits derartige Kommunikationsprotokolle länderspezifisch unter anderem im Rahmen der ETSI TC ITS bei ETSI in Europa und im Rahmen der IEEE 1609 bei IEEE sowie bei SAE in den Vereinigten Staaten von Amerika. Weitere Informationen hierzu lassen sich in den genannten Spezifikationen finden.

Das Fahrzeug 3 kann optional noch die oben genannte Umfeldsensorik in Form einer Kamera 20 und eines Radarsensors 21 aufweisen. Mit der Kamera 20 kann das Fahrzeug 3 innerhalb eines Bildwinkels 22 ein Bild einer Ansicht aufnehmen, die in Fahrtrichtung 7 des Fahrzeuges 3 betrachtet vor dem Fahrzeug 3 liegt. Zudem kann das Fahrzeug 3 mit dem Radarsensor 21 und entsprechenden Radarstrahlen 23 in Fahrtrichtung 7 des Fahrzeuges 3 betrachtet Objekte erkennen und in einer an sich bekannten Weise den Abstand zum Fahrzeug 3 bestimmen.

Um die mit einer Car2X-Nachricht 17 übertragbaren Informationen zu konkretisieren, soll nachstehend zunächst auf den Aufbau des Fahrzeuges 3 und des weiteren Fahrzeuges 5 beispielhaft anhand des Fahrzeuges 3 eingegangen werden. Das Fahrzeug 3 besitzt verschiedene Sicherheitskomponenten von denen in Fig. 2 ein elektronischer Bremsassistent 24, EBA 24 genannt, und eine an sich bekannte Fahrdynamikregelung 25 gezeigt ist. Während der DE 10 2004 030 994 A1 Details zum EBA 24 entnommen werden können, können der DE 10 2011 080 789 A1 Details zur Fahrdynamikregelung 25 entnommen werden.

Das Fahrzeug 3 umfasst ein Chassis 26 und vier Räder 27. Jedes Rad 27 kann über eine ortsfest am Chassis 26 befestigte Bremse 28 gegenüber dem Chassis 26 verlangsamt werden, um eine Bewegung des Fahrzeuges 3 auf der Straße 2 zu verlangsamen.

Dabei kann es in einer dem Fachmann bekannten Weise passieren, dass das die Räder 27 des Fahrzeugs 3 ihre Bodenhaftung verlieren und sich das Fahrzeug 3 sogar von einer beispielsweise über ein nicht weiter gezeigtes Lenkrad vorgegebenen Trajektorie durch Untersteuern oder Übersteuern wegbewegt. Dies wird durch die Fahrdynamikregelung 25 vermieden.

In der vorliegenden Ausführung weist das Fahrzeug 4 dafür Drehzahlsensoren 29 an den Rädern 27 auf, die eine Drehzahl 30 der Räder 27 erfassen.

Basierend auf den erfassten Drehzahlen 30 kann ein Regler 31 in einer dem Fachmann bekannten Weise bestimmen, ob das Fahrzeug 3 auf der Fahrbahn rutscht oder sogar von der oben genannten vorgegebenen Trajektorie abweicht und entsprechend mit einem an sich bekannten Reglerausgangssignal 32 darauf reagieren. Das Reglerausgangssignal 32 kann dann von einer Stelleinrichtung 33 verwendet werden, um mittels Stellsignalen 34 Stellglieder, wie die Bremsen 28 anzusteuern, die auf das Rutschen und die Abweichung von der vorgegebenen Trajektorie in an sich bekannter Weise reagieren.

Der EBA 24 kann über die Kamera 20 erfasste Bilddaten 35 und über den Radarsensor 21 erfasste Abstandsdaten 36 zu Objekten wie Fahrzeugen in Fahrtrichtung 7 vor dem Fahrzeug 3 auswerten und basierend darauf eine Gefahrensituation erfassen. Diese könnte beispielsweise gegeben sein, wenn sich ein Objekt vor dem Fahrzeug 3 diesem mit einer zu hohen Geschwindigkeit nähert. In einem solchen Fall könnte der EBA 24 über ein Notbremssignal 37 die Stelleinrichtung 33 einweisen, über die Stellsignale 34 eine Notbremsung mit den Bremsen 28 auszuführen.

Jedes Mal, wenn der EBA 24 oder die Fahrdynamikregelung 25 über die Stelleinrichtung 33 in das Fahrzeug 4 eingreifen, kann beispielsweise die Stelleinrichtung 33 ein in Fig. 2 gepunktet dargestelltes Berichtssignal 38 ausgeben. Zweckmäßigerweise sollte das Berichtssignal 38 konkretisieren, ob der Eingriff durch den EBA 24 oder die Fahrdynamikregelung 25 bedingt war. Ein derartiges Berichtssignal 38 kann von einer beliebigen Instanz im Fahrzeug 3, also beispielsweise auch vom Regler 31 der Fahrdynamikregelung 25 erzeugt werden. Eine Nachrichtenerzeugungseinrichtung 39 könnte dann basierend auf dem Berichtssignal 38, der absoluten geographischen Lage 12 und einem in Fig.3 gezeigten aus einem Zeitgeber 40 ausgegebenen Zeitstempel 41 eine Car2X-Nachricht 17 erzeugen, mit der der Eingriff des EBAs 24 und/oder der Fahrdynamikregelung 25 als Information über das Car2X-Netzwerk 1 den anderen Knoten 5, 8 berichtet werden kann. Die so erzeugte Car2X-Nachricht 17 könnte dann über die Car2X-Antenne 19 im Car2X-Netzwerk 1 versendet werden.

In dem Beispiel der Fig. 1 wurde ausgeführt, dass die in den Car2X-Nachrichten 17 ausgetauschten Information über die absolute geographische Lage 12 der einzelnen Knoten 3, 5, 8 und/oder über Ereignisse wie der Verkehrsunfall 10 und/oder wie ein Eingriff des EBAs 24 und/oder der Fahrdynamikregelung 25 auf dem Navigationssystem 13 zur Orientierung des Fahrers dargestellt werden könnten. Alternativ oder zusätzlich können basierend auf den in den Car2X-Nachrichten 17 ausgetauschten Informationen aber auch aktiv Stellsignale 34 beispielsweise mit der Stelleinrichtung 33 generiert werden. Wird beispielsweise der Eingriff des EBA 24 als Information in einer Car2X-Nachricht 17 übermittelt, könnte beispielsweise basierend auf dem Empfang dieser Car2X-Nachricht 17 automatisch der EBA 24 in dem empfangenden Fahrzeug 3, 8 ausgelöst werden.

Nachstehend soll anhand der Fig. 3 die Übertragung einer Car2X-Nachricht 17 über das Car2X-Netzwerk 1 erläutert werden, das in Fig. 3 der Übersichtlichkeit halber mit einer Wolke angedeutet ist. Als Inhalt der Car2X-Nachricht 17 soll beispielsweise ein durch die Stelleinrichtung 33 mit dem Berichtssignal 38 berichteter Eingriff durch den EBA 24 in das am Verkehrsunfall 10 beteiligte Unfall-Fahrzeug 8 angenommen werden.

Wie bereits erläutert erzeugt die Nachrichtenerzeugungseinrichtung 39 basierend auf dem Berichtssignal 38, der absoluten geographischen Lage 12 und dem Zeitstempel 41 die Car2X-Nachricht 17 gemäß dem oben erwähnten Kommunikationsprotokoll. Die Nachrichtenerzeugungseinrichtung 39 kann dabei prinzipiell auch Teil des Car2X-Transceivers 16 sein.

Aus der Car2X-Nachricht 17 werden in dem Car2X-Transceiver 16 des Unfall-Fahrzeuges 8 in einer Datenpaketerzeugungseinrichtung 42 Datenpaketen 43 erzeugt. Durch das Erzeugen von Datenpaketen 43 können Car2X-Nachrichten 17 aus verschiedenen Anwendungen in dem Unfall-Fahrzeug 8 zu einem einzigen Datenstrom zusammengefasst werden, um das Car2X-Signal 18 zu erzeugen. Die Datenpaketerzeugungseinrichtung 42 entspricht daher einer Netzwerk- und Transportschicht (eng. network and transport layer), deren Aufgabe es bekanntlich ist die Netzwerkdaten aus verschiedenen Anwendungen zu routen. Der Aufbau der Datenpaketerzeugungseinrichtung 42 ist von der oben genannten Spezifikation des Kommunikationsprotokolls für das Car2X-Netzwerk 1 abhängig.

Die generierten Datenpakete 43 werden in einer Modulationseinrichtung 44 auf das Car2X-Signal 18 aufmoduliert und im Car2X-Netzwerk 1 drahtlos versendet. Die Modulationseinrichtung 44 entspricht daher einer Schnittstellenschicht, deren Aufgabe es ist, das Unfall-Fahrzeug 8 physikalisch an das Car2X-Netzwerk 1 anzubinden. Auch der Aufbau der Modulationseinrichtung 44 ist von der oben genannten Spezifikation des Kommunikationsprotokolls für das Car2X-Netzwerk 1 abhängig.

Auf Seiten des nicht am Verkehrsunfall 10 beteiligten Fahrzeuges 3 kann das vom Unfall-Fahrzeug 8 versendete Car2X-Signal 18 dann über die Car2X-Antenne 19 empfangen werden.

Um die Car2X-Nachricht 17 aus dem Car2X-Signal 18 zu extrahieren weist der Car2X-Transceiver 16 des Fahrzeuges 3 eine Demodulationseinrichtung 45 auf, die die senderseitige Modulation der Datenpakete 43 in an sich bekannter Weise rückgängig macht. Entsprechend kann eine Nachrichtenextraktionseinrichtung 46 die Car2X-Nachrichten 17 aus den Datenpaketen 43 extrahieren und den Anwendungen im Fahrzeug 3, wie dem Navigationssystem 13 oder auch der Stelleinrichtung 33 zur Verfügung stellen. Letztendlich stellen die Demodulationseinrichtung 45 und die Nachrichtenextraktionseinrichtung 46 die empfangsseitigen Gegenstücke entsprechend der oben genannten Netzwerk und Transportschicht und der Schnittstellenschicht dar und sind ebenfalls von der oben genannten Spezifikation des Kommunikationsprotokolls für das Car2X-Netzwerk 1 abhängig.

Zu Details der einzelnen Netzwerkschichten wird daher auf die einschlägigen Spezifikationen verwiesen.

Insbesondere in Hochlastsituationen, wenn sich auf der Straße 2 eine Vielzahl von Knoten 3, 5, 8 im Car2X-Netzwerk 1 befinden, müssen in den jeweiligen Knoten 3, 5, 8 zur Verarbeitung aller im Car2X-Netzwerk 1 versendeten Car2X-Nachrichten 17 entsprechend hohe Rechenressourcen freigehalten werden, um empfängerseitig die Verarbeitung aller Car2X-Nachrichten 17 innerhalb bestimmter Zeitschranken zu garantieren. Die Bereitstellung dieser hohen Rechenressourcen ist mit einem entsprechend hohen Kostenaufwand verbunden, der im Rahmen der vorliegenden Ausführung durch die Einführung von Vorfiltern 47, 48 reduziert werden soll.

Die Idee hinter den Vorfiltern 47, 48 ist, potentiell irrelevante Car2X-Nachrichten 17 möglichst frühzeitig auszusortieren, um zu vermeiden, dass diese durch ein Element in der Empfangskette unnötigerweise verarbeitet werden müssen, weil sie ohnehin für den Empfangsknoten irrelevante Informationen. Eine Möglichkeit wäre einen ersten Vorfilter 47 der beiden Vorfilter 47, 48 zwischen der Car2X-Antenne 19 und der Demodulationseinrichtung 45 zu platzieren und die Vorfilterung basierend auf einer Signalstärke des Car2X-Signals 18 durchzuführen. Hinter dem ersten Vorfilter 47 steht die Idee, dass vom Empfangsknoten, also vom nicht am Unfall 10 beteiligten Fahrzeug 3 weiter entfernte Knoten 5, 8 weniger relevant sind, weil diese zumindest aus Sicht der Verkehrssicherheit für das nicht am Unfall 10 beteiligte Fahrzeug 3 in unmittelbarer zeitlicher Nähe nicht gefährlich werden können.

Aus dem so gefilterten Car2X-Signal 49 können dann die Datenpakete 43 demoduliert werden.

Zur Erweiterung des zuvor genannten Ansatzes, die Car2X-Nachrichten 17 von weiter vom Empfangsknoten entfernten Sendeknoten herauszufiltern, ohne die entsprechenden Car2X-Nachrichten 17 selbst zu entpacken, wird im Rahmen der vorliegenden Ausführung vorgeschlagen, im zweiten Vorfilter 47 der beiden Vorfilter 47, 48 die Datenpakete 43 basierend auf den in den Datenpaketen 43 stets enthaltenen Positionsdaten, also der absoluten geographischen Lage 12 zu filtern. Dies ist möglich, weil die absolute geographische Lage 12 in der Regel an einer vorbestimmten Stelle im Datenpaket 43 beispielsweise im Header des Datenpaketes 43 getragen wird. Erst aus den so gefilterten Datenpaketen 50 können dann in der Nachrichtenextraktionseinrichtung 46 die Car2X-Nachrichten 17 extrahiert werden, wobei der Rechenaufwand der Nachrichtenextraktionseinrichtung 46 aufgrund der vorab durch die Vorfilter 47, 48 wegfallenden Car2X-Nachrichten 17 spürbar abgenommen hat.

Zur Realisierung des zweiten Vorfilters 46 wird vorgeschlagen, eine Entscheidungsschwelle für einen Abstand 51 zwischen einem Empfangsknoten und einem Sendeknoten zu definieren, ab dem ein Datenpaket 43 ausgefiltert und die entsprechende Car2X-Nachricht 17 ignoriert werden soll. Bevor auf die Definition der Entscheidungsschwelle für den zuvor genannten Abstand 51 zwischen einem Empfangsknoten und einem Sendeknoten näher eingegangen werden kann, soll zunächst geklärt werden, was in dem Car2X-Netzwerk 1 ein Empfangsknoten und was ein Sendeknoten ist.

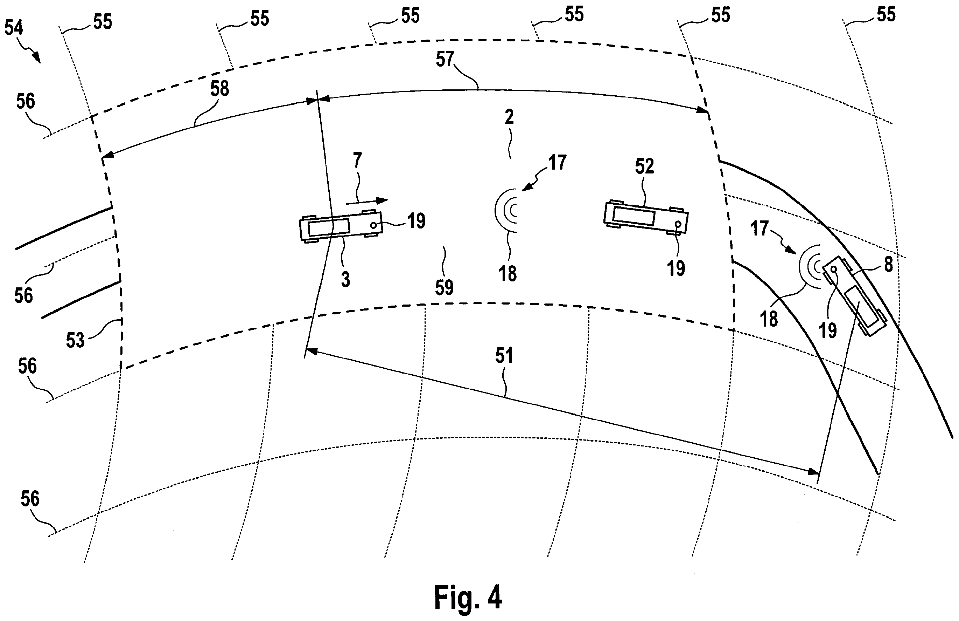

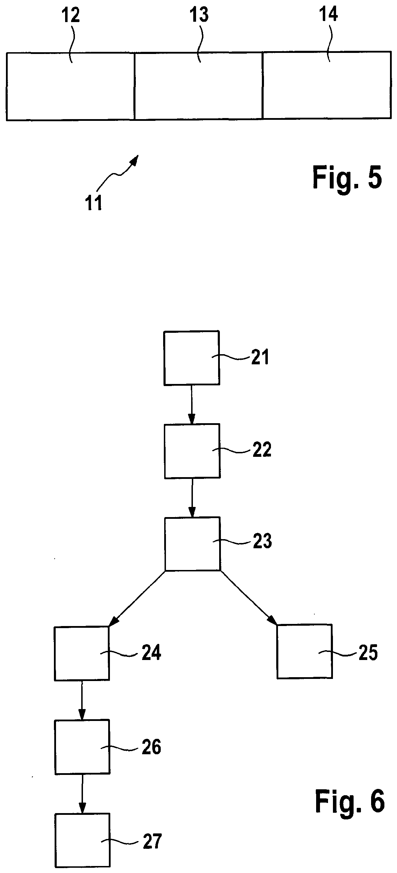

Hierzu wird auf Fig. 4 Bezug genommen.

Ein Empfangsknoten soll in dem Car2X-Netzwerk 1 immer ein Knoten 3, 5, 8 sein, der eine Car2X-Nachricht 17 empfängt. Dies ist im Rahmen der Fig. 4 beispielsweise das nicht am Unfall 10 beteiligte Fahrzeug 3. Daher steht das nicht am Unfall beteiligte Fahrzeug 3 nachstehend für den Empfangsknoten.

Ein Sendeknoten soll in dem Car2X-Netzwerk 1 immer ein Knoten 3, 5, 8 sein, der eine Car2X-Nachricht 17 erzeugt und absendet und daher deren Ursprung darstellt. Ein Sendeknoten kann daher auch als Originator einer Car2X-Nachricht 17 bezeichnet werden. Im Rahmen der Fig. 4 soll als Sendeknoten das am Unfall 10 beteiligte Fahrzeug 8 für den Sendeknoten stehen.

Damit Car2X-Nachrichten 17 in dem Car2X-Netzwerk 1 auch über Abstände 51 übertragen werden können, die die Sendereichweite eines Car2X-Signal 17 übersteigt, können Knoten 3, 5, 8 im Car2X-Netzwerk 1, die zwischen den Sendeknoten 8 und dem Empfangsknoten 3 liegen und die das Car2X-Signal 18 mit der Car2X-Nachricht 17 beispielsweise vom Sendeknoten 8 empfangen, die Car2X-Nachricht 17 mit einem eigenen Car2X-Signal 18 an den Empfangsknoten 3 weiterleiten. Derartige Weiterleitungsknoten oder Zwischenknoten können beliebige Teilnehmer des Car2X-Netzwerkes 1 sein. In Fig. 4 ist hierfür ein eigenes Fahrzeug mit dem Bezugszeichen 52 angedeutet.

Die zuvor genannte Entscheidungsschwelle soll dabei für Abstände 51 zwischen dem Sendeknoten 8 als Ursprung einer Car2X-Nachricht 17 und nicht als Ursprung eines Car2X-Signals 18 und dem Empfangsknoten 3 definiert werden.

Im Rahmen der vorliegenden Ausführung wird die Entscheidungsschwelle in Form eines Korridors 53 definiert, der um den Empfangsknoten 3 gelegt ist. Eine Car2X-Nachricht 18 soll vom zweiten Vorfilter 46 ausgefiltert werden, wenn die geographische Lage 12 des Sendeknotens 8 beim Absenden der Car2X-Nachricht 18 nicht in den Korridor 53 fällt.

Die Form, in der die geographische Lage 12 eines Knotens 3, 5, 8, 52 im Car2X-Netzwerk 1 beschrieben wird, hängt von der oben genannten Spezifikation ab. In der Regel wird die geographische Lage 12 in einem kartesischen Koordinatensystem beschrieben, weil sich die geographische Lage 12 in diesem am einfachsten rechnerisch verarbeiten lassen. In diesem durch die Spezifikation definierten Koordinatensystem könnte auch die Entscheidungsschwelle und damit der Korridor 53 definiert werden.

Der GNSS-Empfänger 11 bestimmt die geographische Lage 12 jedoch prinzipbedingt in einem ellipsoiden Koordinatensystem 54 mit Längengraden 55 und Breitengraten 56. Unter der Voraussetzung, dass die Entscheidungsschwelle und damit der Korridor 53 in der zuvor genannten Weise in dem durch die Spezifikation definierten Koordinatensystem definiert sind, müsste die geographische Lage 12 in einer Car2X-Nachricht 17 im zweiten Vorfilter 46 erst in das entsprechende Koordinatensystem transformiert werden. Das hat den Vorteil, dass die transformierte geographische Lage 12 dann unmittelbar weiter verwendet werden kann, und dass die Entscheidungsschwelle und damit der Korridor 53 unmittelbar in dem rechnerisch einfacher zu behandelnden durch die Spezifikation bestimmten Koordinatensystem bestimmt werden können.

Hier setzt die vorliegende Ausführungsform mit dem Vorschlag an, die Entscheidungsschwelle und damit den Korridor 53, wie in Fig. 4 gezeigt, unmittelbar in dem ellipsoiden Koordinatensystem 54 zu bestimmen. Das ist, was den Rechenaufwand betrifft, auf den ersten Blick kontraproduktiv, denn nicht nur die Bestimmung der Entscheidungsschwelle und damit des Korridors 53 in dem ellipsoiden Koordinatensystem 54 ist aufgrund der trigonometrischen Zusammenhänge, rechenintensiv, die geographische Lage 12 muss nach dem Passieren des zweiten Vorfilters 46 zudem noch in das durch die Spezifikation definierten Koordinatensystems umgewandelt werden.

Unter Berücksichtigung einer Hochlastsituation in dem Car2X-Netzwerk 1, in dem eine Vielzahl von Car2X-Nachrichten 26 von einer Vielzahl verschiedener Knoten 3, 5, 8, 52 zu erwarten sind, kommt der oben genannte Gedanke deutlich zu Vorschein. Werden die Car2X-Nachrichten 17 unmittelbar im durch den GNSS-Empfänger 11 vorgegebenen ellipsoiden Koordinatensystem 54 gefiltert, brauchen die geographischen Lagen aller Datenpakete 43 und damit aller Car2X-Nachrichten 17, die das zweite Vorfilter 46 nicht passieren, auch nicht in das durch die Spezifikation definierte Koordinatensystem transformiert werden. In einer Hochlastsituation, in der der Aufwand zum Umrechnen der geographischen Lagen 12 in den einzelnen empfangenen Datenpaketen 43 den Aufwand für die Bestimmung der Entscheidungsschwelle und damit des Korridors 53 direkt im ellipsoiden Koordinatensystem 54 um ein Vielfaches übersteigen würde, können so Rechenressourcen spürbar eingespart werden.

Um die Rechenressourcen weiter einzusparen, sollte die Entscheidungsschwelle und damit der Korridor 82 derart definiert werden, dass der Korridor 53 möglichst wenig neu berechnet werden muss. Hierzu wird der Korridor 53 in Fahrtrichtung 7 des als Empfangsknoten wirkenden Fahrzeuges 3 gesehen mit einem ersten Korridorabschnitt 57 vor dem Fahrzeug 3 und einen zweiten Korridorabschnitt 58 hinter dem Fahrzeug 3 aufgebaut. Dabei sollte der erste Korridorabschnitt 57 länger sein, als der zweite Korridorabschnitt 58, um dem Verkehr in Fahrtrichtung 7 vor dem Fahrzeug 3 eine entsprechend höhere Relevanz einzuräumen.

Die beiden Korridorabschnitte 57, 58 werden für einen Zeitraum als konstant festgelegt, der so gewählt sein sollte, dass der Korridor 53 und damit die Entscheidungsschwelle einerseits nicht allzu häufig aktualisiert werden müssen, aber andererseits nicht allzu viele Datenpakete 43 das zweite Vorfilter 46 passieren.

Als Grundlage der Aktualisierung des Korridors 53 kann beispielsweise im Korridor 53 ein weiterer, innerer Korridor 59 definiert werden. Solange sich der Empfangsknoten und damit das Fahrzeug 3 im inneren Korridor 59 aufhalten, kann der äußere Korridor 53 unverändert bleiben. Verlässt das Fahrzeug 3 den inneren Korridor 59, dann können der äußere Korridor 53 und gleichzeitig auch der innere Korridor 59 aktualisiert werden.

Die beiden Korridorabschnitte 57, 58 des äußeren Korridors 53 können dabei beispielsweise basierend auf einem Randbereich des inneren Korridors 59 festgelegt werden. Die Größe des inneren Korridors 59 und/oder die Größe des äußeren Korridors 53 können dabei abhängig von der Geschwindigkeit des Empfangsknotens und damit des Fahrzeuges 3 sein, um beispielsweise freie Fahrten auf der Autobahn und Staufahrten entsprechend im zweiten Vorfilter 46 zu berücksichtigen.

## Patentansprüche

1. Verfahren zum Filtern einer zwischen einem Sender (8) und einem Empfänger (3) in einem Fahrzeug-Ad-hoc-Netzwerk (1) übertragenen Nachricht (17), die wenigstens eine Position (12) des Senders (8) enthält, umfassend:
- Bestimmen einer Position (12) des Empfängers (3) mittels eines globalen Satellitennavigationssystems (11) in einem vorbestimmten Koordinatensystem (54),
- Bestimmen einer Entscheidungsschwelle (53) zwischen dem Empfänger (3) und dem Sender (8) in dem vorbestimmten Koordinatensystem (54), in dem die Position (12) des Empfängers (3) bestimmt wurde, und
**dadurch gekennzeichnet, dass**
- die Entscheidungsschwelle (53) einen Korridor (53) um die Position (12) des Empfängers (3) umfasst, wobei die Nachricht (17) verworfen wird, wenn die Position (12) des Senders (8) außerhalb des Korridors (53) liegt, und
- eine Aktualisierung des Korridors (53) nur dann erfolgt, wenn der Empfänger (3) einen weiteren, im Korridor (53) liegenden Korridor (59) verlässt.

2. Verfahren nach Anspruch 1, wobei das vorbestimmte Koordinatensystem (54) ein sphärisches Koordinatensystem ist, das Positionen in Geokoordinaten (55, 56) auf der Erdoberfläche beschreibt.

3. Verfahren nach Anspruch 2, wobei der Empfänger (3) ein Fahrzeug und der Korridor (53) in Fahrtrichtung (7) des Fahrzeuges größer ist, als entgegen der Fahrtrichtung (7).

4. Verfahren nach einem der vorangehenden Ansprüche, wobei der weitere Korridor (59) von einer Geschwindigkeit des Empfängers (3) abhängig ist.

5. Verfahren nach einem der vorstehenden Ansprüche, wobei die Nachricht (17) wenigstens Teil eines Datenpaktes (43) ist, in dem die Position (12) des Senders (8) in einem Header des Datenpaketes (43) gespeichert ist.

6. Empfänger (16) für ein Fahrzeug (3) zum Empfangen eines Übertragungssignals (18), das eingerichtet ist Nachrichten (17) mit Positionsdaten (12) zu Teilnehmern (3, 5, 8, 52) eines Fahrzeug-Ad-Hoc-Netzwerkes (1) in Datenpaketen (43) zu tragen, umfassend:
- eine Antenne (19) zum Empfangen des Übertragungssignals (18), und
- eine Filtervorrichtung (46) zum Filtern wenigstens eines Teils der Datenpakete (43) aus dem Übertragungssignal (18) basierend auf den Positionsdaten (12), wobei die Filtervorrichtung (46) hergerichtet ist zur Durchführung eines Verfahrens nach einem der vorstehenden Ansprüche.

## Claims

1. A method for filtering a message (17) transmitted between a transmitter (8) and a receiver (3) in a vehicular ad hoc network (1), said message containing at least one position (12) of the transmitter (8), comprising:
- determining a position (12) of the receiver (3) by means of a global satellite navigation system (11) in a predetermined coordinate system (54),
- determining a decision threshold (53) between the receiver (3) and the transmitter (8) in the predetermined coordinate system (54) in which the position (12) of the receiver (3) was determined,
**characterized in that**
- the decision threshold (53) comprises a corridor (53) around the position (12) of the receiver (3), wherein the message (17) is discarded if the position (12) of the transmitter (8) is located outside the corridor (53), and an update of the corridor (53) only takes place if the receiver (3) leaves a further corridor (59) which is located in the corridor (53).

2. The method according to Claim 1, wherein the predetermined coordinate system (54) is a spherical coordinate system which describes positions in geographic coordinates (55, 56) on the surface of the earth.

3. The method according to Claim 2, wherein the receiver (3) is a vehicle and the corridor (53) is greater in the direction of travel (7) of the vehicle than in the direction opposite to the direction of travel (7).

4. The method according to any one of the preceding claims, wherein the further corridor (59) is dependent on a speed of the receiver (3).

5. The method according to any one of the preceding claims, wherein the message (17) is at least part of a data packet (43) in which the position (12) of the transmitter (8) is stored in a header of the data packet (43).

6. A receiver (16) for a vehicle (3) for receiving a transmission signal (18) which is equipped to carry messages (17) with position data (12) regarding subscribers (3, 5, 8, 52) of a vehicular ad hoc network (1) in data packets (43), comprising:
- an antenna (19) for receiving the transmission signal (18), and
- a filtering device (46) for filtering at least a part of the data packets (43) from the transmission signal (18) based on the position data (12), wherein the filtering device (46) is set up to carry out a method according to any one of the preceding claims.

## Revendications

1. Procédé pour le filtrage d'un message (17) transmis entre un émetteur (8) et un récepteur (3) sur un réseau ad hoc de véhicule (1), lequel message contient au moins une position (12) de l'émetteur (8), comprenant :
- détermination d'une position (12) du récepteur (3) au moyen d'un système de positionnement par satellites (11) dans un système de coordonnées prédéterminé (54),
- détermination d'un seuil de décision (53) entre le récepteur (3) et l'émetteur (8) dans le système de coordonnées prédéterminé (54), dans lequel la position (12) du récepteur (3) a été déterminée,
**caractérisé en ce que**
- le seuil de décision (53) comprend un corridor (53) autour de la position (12) du récepteur (3), le message (17) étant rejeté lorsque la position (12) de l'émetteur (8) se trouve hors du corridor (53), et une actualisation du corridor (53) n'étant effectuée que lorsque le récepteur (3) quitte un autre corridor (59) se trouvant dans le corridor (53).

2. Procédé selon la revendication 1, le système de coordonnées prédéterminé (54) étant un système de coordonnées sphérique, décrivant des positions en géocoordonnées (55, 56) sur la surface terrestre.

3. Procédé selon la revendication 2, le récepteur (3) étant un véhicule et le corridor (53) étant plus grand dans le sens du déplacement (7) du véhicule que dans le sens opposé au sens de déplacement (7).

4. Procédé selon l'une quelconque des revendications précédentes, l'autre corridor (59) étant fonction d'une vitesse du récepteur (3).

5. Procédé selon l'une quelconque des revendications précédentes, le message (17) faisant au moins partie d'un paquet de données (43), dans lequel la position (12) de l'émetteur (8) est enregistrée dans un en-tête du paquet de données (43).

6. Récepteur (16) pour un véhicule (3) pour la réception d'un signal de transmission (18), lequel est configuré pour porter des messages (17) avec des données de position (12) relatives à des participants (3, 5, 8, 52) d'un réseau ad hoc de véhicule (1) dans des paquets de données (43), comprenant :
- une antenne (19) pour la réception du signal de transmission (18), et
- un dispositif de filtre (46) pour le filtrage d'au moins une partie des paquets de données (43) hors du signal de transmission (18) basé sur les données de position (12), le dispositif de filtre (46) étant conçu pour l'exécution d'un procédé selon l'une quelconque des revendications précédentes.
